# EUROPEAN PATENT APPLICATION

(11) **EP 1 610 546 A2**
(43) Date of publication of application: **28.12.2005**
(21) Application number: 05253696.8
(22) Date of filing: 15.06.2005
(51) Int. Cl.: H04N 5/44

(54) **High frequency signal receiving apparatus**

(30) Priority: 23.06.2004 JP 2004184415
(71) Applicant: SONY CORPORATION, Tokyo 141 (JP)
(72) Inventor: Maejima, Kazuhiko, c/o Sony Corporation, Shinagawa-ku, Tokyo 141 (JP); Yamauchi, Toshiyuki, c/o Sony Corporation, Shinagawa-ku, Tokyo 141 (JP)
(74) Representative: Turner, James Arthur

(57) **Abstract**

A high frequency signal receiving apparatus for use in a portable electronic device, has a first tuner section (13) which receives a terrestrial digital TV broadcast signal, selects a channel of the received signal, and demodulates a signal of the selected channel. The apparatus also has a second tuner section (15) which selectively receives a terrestrial analog TV broadcast signal or an FM radiobroadcast signal, selects a channel of the received signal, and demodulating a signal of the selected channel. In addition to the first tuner section that realizes a feature to receive terrestrial digital broadcasts, a second tuner section is provided which realizes a feature to receive terrestrial analog TV broadcasts and FM radiobroadcasts.

## Description

This invention relates to signal receiving apparatus.

An electronic device is widely used such as a personal computer or a video camera equipped with a display such as a liquid crystal display (LCD) or a speaker. By installing a TV broadcast reception feature in these electronic devices, their range of practical application can be expanded. However, the electronic devices such as personal computers and video cameras do not always need such the TV broadcast reception feature.

In view of the above, Japanese Patent Application Publication No. Hei 5-14133 discloses a technology for making up a card-type electronic tuner in which a tuner circuit, a channel control circuit, a demodulation circuit, etc. for terrestrial analog TV broadcasting are installed in so-called card-type chassis thereof. With this configuration, only by attaching the card-type electronic tuner into a PC card slot in a personal computer or a video camera only when required, it is possible to add the TV broadcast reception features to these electronic devices.

Further, prevalence of the cellular phones and the PDAs has brought about an idea to install the TV broadcast reception features also in these portable electronic devices, with the development and practical application of a tuner module miniaturized more than the card-type electronic tuner being in progress.

Recently, as the terrestrial digital TV broadcasting starts, it is reasonable to assume that digital TV broadcasting dedicated for mobile devices will be planned. For example, in Japan, in addition to 13 segments of ordinary terrestrial digital TV broadcasting of integrated services digital broadcasting-terrestrial (ISDB-T), digital TV broadcasting for mobiles that utilizes one of the 13 segments is being planned.

Various types of mobile terminal devices for receiving such the mobile digital TV broadcasts are expected. A typical one therefor is a cellular phone. It is preferable that a TV broadcast receiving tuner module installed in the mobile terminal device to receive the mobile digital TV broadcasts is miniaturized and thinned than those used in a past TV receiving apparatus.

However, in the case of the digital mobile TV broadcasting, as described above, the one segment (with a frequency bandwidth of 500kHz) of the 13 segments (with a frequency bandwidth of 6MHz) of terrestrial digital broadcasts is used, so that simplification of the reception circuit is considered to be relatively easy. It is then possible to make up a tuner module for digital mobile TV broadcasts by using at least two integrated circuits (ICs) of a high frequency circuit section for receiving a terrestrial digital broadcast signal, which is a high frequency signal, and selecting a channel of the signal and then converting it into an intermediate frequency signal and a digital demodulation section for converting this converted intermediate frequency signal into an original base-band signal (digital signal). It is thus possible to miniaturize and thin the tuner module so that the module can be installed into a mobile device such as a cellular phone.

Although it is thus possible to make up a miniaturized and thinned tuner module for digital mobile TV broadcasts, a tuner module for digital mobile TV broadcasts does not have a feature to receive and demodulate a terrestrial analog TV Broadcasts or FM radiobroadcasts. Therefore, it may be impossible to receive a terrestrial analog TV broadcast signal and an FM radiobroadcast signal, select their channels, demodulate the signal of selected channel, and utilize it.

However, a mobile device such as a cellular phone may be prohibited from receiving a digital mobile TV broadcast because it is used while being carried. The mobile device, however, can receive a terrestrial analog TV broadcast and an FM radiobroadcast in some environments. Of course, it may be opposite. Further, the mobile devices, which are used as being carried, may receive a broadcast signal that is different from an ordinary one during a trip, for example.

Therefore, it is desired to enable reception, demodulation, and utilization of a digital mobile TV broadcast signal and any other broadcast signal, for example, a terrestrial analog TV broadcast signal or an FM radiobroadcast signal beforehand so that information can be obtained for sure through any one of these broadcast signals at a variety of destinations.

In view of the above, there is a need to provide a miniaturized and thinned high frequency signal receiving apparatus that is provided with features to receive and demodulate a terrestrial digital TV broadcast signal as well as any other broadcast signals and could well be applied to a portable electronic device.

Various respective aspects and features of the invention are defined in the appended claims. Features from the dependent claims may be combined with features of the independent claims as appropriate and not merely as explicitly set out in the claims.

Embodiments of the present invention relate to a signal receiving apparatus that can be installed in a variety of so-called mobile devices (portable electronic devices) such as a cellular phone, a portable information device referred to as personal digital assistants (PDA) or the like, and a laptop computer, to make it possible to receive and utilize a broadcast signal such as a high frequency signal.

According to an embodiment of the present invention, there is provided a high frequency signal receiving apparatus for use in a portable electronic device. The receiving apparatus has a first tuner section which receives a terrestrial digital TV broadcast signal, selects a channel of the received signal, and demodulates a signal of the selected channel. The receiving apparatus also has a second tuner section which selectively receives a terrestrial analog TV broadcast signal or an FM radiobroadcast signal, selects a channel of the received signal, and demodulates a signal of the selected channel.

In accordance with the embodiment of the high frequency signal receiving apparatus of the present invention, in addition to a first tuner section that realizes a feature to receive terrestrial digital broadcasts, a second tuner section is provided which realizes a feature to receive terrestrial analog TV broadcasts and FM radiobroadcasts.

With this, anywhere it is possible to receive any one of the terrestrial digital TV broadcasts, the terrestrial analog TV broadcasts, and the FM radiobroadcasts, information can be surely obtained through broadcasting and utilized.

According to another embodiment of the present invention, the first tuner section has a first high frequency circuit section which receives a terrestrial digital TV broadcast signal, selects its channel, and converts the signal of the selected channel into an intermediate frequency signal. The first tuner section also has a digital demodulation section which demodulates a target digital signal from the intermediate frequency signal from the first high frequency circuit section. Further, the second tuner section has a second high frequency circuit which selectively receives a terrestrial analog TV broadcast signal or an FM radiobroadcast signal, selects a channel of the received signal, and converts the signal of the selected channel into an intermediate frequency signal. The second tuner section also has an analog audio signal demodulation section which demodulates at least one of an audio signal of the terrestrial analog TV broadcast signal and an audio signal of the FM radiobroadcast signal from the intermediate frequency signal from the high frequency circuit. Additionally, the first tuner section and the second tuner section are commonly used, as the first and second high frequency circuit sections respectively, as one high frequency circuit having a wide band that can accommodate a broadcast signal in a transmission band from the FM radiobroadcast signal to the terrestrial digital TV broadcast signal.

In accordance with the above another embodiment of high frequency signal receiving apparatus according to the present invention, first and second tuner sections both have the high frequency circuit that receives a target broadcast signal and selects a channel corresponding to it. In this embodiment, however, one high frequency circuit having a supportable wide frequency bandwidth that covers from an FM radiobroadcast transmission band to a terrestrial digital TV broadcast transmission band is shared in use as first and second high frequency circuits of the first and second tuner sections, respectively.

It is thus unnecessary to equip an individual high frequency circuit for each of the first and second tuner sections, thereby miniaturizing and thinning the high frequency signal receiving apparatus. That is, it is possible to make up a high frequency signal receiving apparatus that could well be applied to installation in a variety of mobile devices, which is necessary for being small and light.

According to further embodiment of the present invention, the analog sound demodulation section has a commonly-used FM demodulation section for detecting an audio signal of a terrestrial analog TV broadcast and an audio signal of an FM radiobroadcast.

In accordance with the above further embodiment of the high frequency signal receiving apparatus according to the present invention, as the analog sound demodulation section, the same FM demodulation section (FM detection section) may be used in both of the cases where an audio signal for terrestrial analog TV broadcasts is utilized and where an audio signal for FM radiobroadcasts is utilized.

Thus, the same FM demodulation section can be used to demodulate both an audio signal provided by a terrestrial analog TV broadcast and an audio signal provided by an FM radiobroadcast. It is thus possible to facilitate miniaturization and thinning of a high frequency signal receiving apparatus so that it could well be applied to use in a mobile device.

According to still further embodiment of the present invention, the first tuner section and the second tuner section are housed in a card-type frame to be attached to and detached from portable electronic device.

In accordance with the above still further embodiment of the high frequency signal receiving apparatus according to the present invention, it is possible to install first and second tuner sections in a card-type frame of the high frequency signal receiving apparatus, thereby adding to a portable electronic device a feature to receive a broadcast signal only when necessary. Moreover, a plurality of broadcast signals can be received such as for a terrestrial digital TV broadcast, a terrestrial analog TV broadcast, and an FM radiobroadcast, thereby surely providing an opportunity to obtain information through any broadcasts.

According to the above embodiments of the high frequency signal receiving apparatus of the present invention, it is possible to receive a digital mobile TV broadcast as well as a terrestrial analog TV broadcast and an FM radiobroadcast in a portable electronic device, select a channel thereof, and utilize audio signals thereof. Therefore, even at a place where a digital mobile TV broadcast may not be received, as far as a terrestrial analog TV broadcast and an FM radiobroadcast can be received, their audio signals can be utilized. Even at a place where a terrestrial analog TV broadcast and an FM radiobroadcast may not be received, as far as a digital mobile TV broadcast can be received, both of its video signal and audio signal can be utilized. That is, by enabling utilization of a plurality of kinds of broadcast signals, it is possible to secure effectiveness of the feature to obtain the information through broadcasting.

Further, by sharing a circuit section having commonly-used functions, it is possible to miniaturize and thin a high frequency signal receiving apparatus that could well be applied to use in a portable electronic device.

The concluding portion of this specification particularly points out and directly claims the subject matter of the present invention. However those skilled in the art will best understand both the organization and method of operation of the invention, together with further advantages and objects thereof, by reading the remaining portions of the specification in view of the accompanying drawing(s) wherein like reference characters refer to like elements.

The invention will now be described by way of example with reference to the accompanying drawings, throughout which like parts are referred to by like references, and in which:
FIG. 1 is an explanatory block diagram of a cellular phone to which one embodiment of a high frequency signal receiving apparatus of the present invention is applied;
FIG. 2 is an explanatory diagram of a tuner module to which the one embodiment of the high frequency signal receiving apparatus of the present invention is applied;
FIGS. 3A and 3B are diagrams for comparing a size of the tuner module that uses an embodiment of the high frequency signal receiving apparatus of the present invention and that of a past tuner module;
FIG. 4 is an explanatory diagram of another embodiment of an analog sound demodulation section of tuner module 1 that is used in an embodiment of the high frequency signal receiving apparatus of the present invention; and
FIG. 5 is an explanatory diagram of a configuration of a card-type tuner made up by utilizing a tuner module that is used in an embodiment of the high frequency signal receiving apparatus according to the present invention.

The following will describe embodiments of a high frequency signal receiving apparatus according to the present invention with reference to drawings. The following embodiments will be described with reference to a case where the present invention is applied to a cellular phone.

### [System in which tuner module is installed]

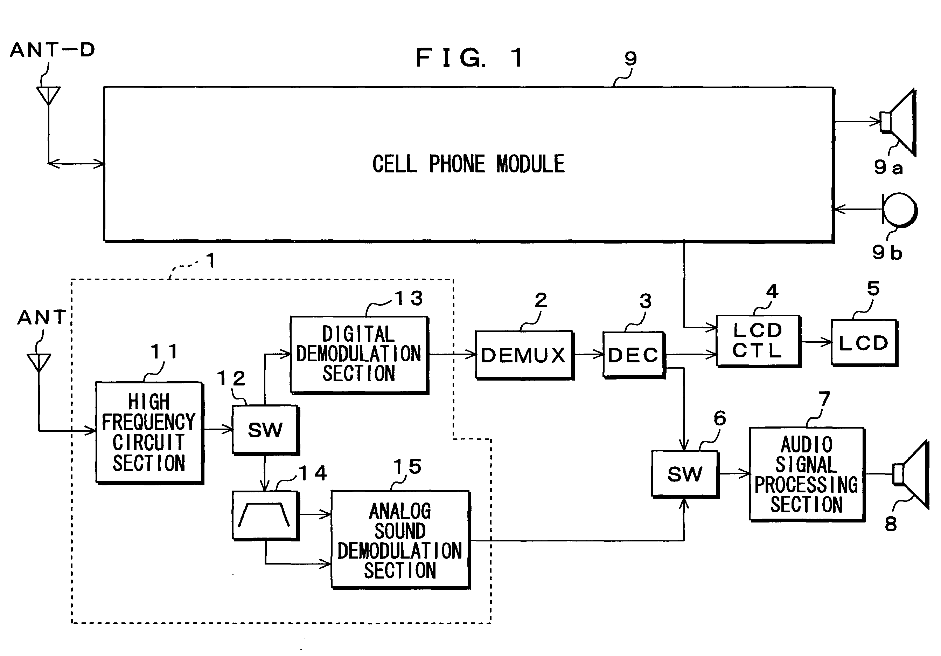

FIG. 1 is an explanatory block diagram of a cellular phone. In the cellular phone, a tuner module 1 to which an embodiment of a high frequency signal receiving apparatus according to the present invention is applied is installed. As shown in FIG. 1, the cellular phone relative to the present embodiment has a transmission/reception antenna ANT-D for communication, a cellular phone module 9 having, for example, a reception circuit, a transmission circuit, a base-band processing section, a sound codec, a key operation section, and a control circuit, a telephone receiver 9a, and a telephone transmitter 9b.

With this configuration, it is possible to connect a cellular phone network through the cellular phone module 9 for telephone communication with a target partner, create an e-mail and transmit it or receive an e-mail for its own cellular phone and display it, and access a Web page and view it, through a display device of its own cellular phone as described later. It is to be noted that the transmission and reception of the e-mail and the viewing of the Web page are performed by connecting the Internet via the cellular phone network.

Further, the cellular phone also has a liquid crystal display (LCD) controller 4 (written as LCDCTL in FIG. 1) and an LCD5, which is a display device having a relatively large display screen. Thus, it is also possible to display, for example, a telephone book list, an transmission e-mail, a receipt e-mail, Web page information, other various pieces of guidance and message information, etc. on the display screen of the LCD 5 through the LCD controller 4. Further, the cellular phone also has an audio signal processing section 7 and a speaker 8. Thus, it is also possible to produce an incoming call sound (or incoming call melody) and various alarm sounds having a relatively high sound quality.

Furthermore, as shown in FIG. 1, the cellular phone has an antenna ANT for reception of a broadcast signal, the tuner module 1 for reception of the broadcast signal, a de-multiplexer 2 (written as DEMUX in FIG. 1), an MPEG decoder 3 (written as DEC in FIG. 1), and a switch circuit 6 (written as SW in FIG. 1).

As shown in FIG. 1, the tuner module 1 includes a high frequency circuit section 11, a switch circuit 12 (written as SW in FIG. 1), a digital demodulation section 13, and an analog sound demodulation section 15. The cellular phone can receive a digital mobile TV broadcast, a terrestrial analog TV broadcast, and an FM radiobroadcast and select their channels, which are detailed later, so that a video and a sound of the digital mobile TV broadcast, a sound of the terrestrial analog TV broadcast, and a sound of the FM radiobroadcast may be utilized, respectively.

That is, the tuner module 1 can receive, and select channels of broadcast signals having a frequency band from an FM radiobroadcast band to a UHF band (77-770MHz (FM signal frequency band of 77-90MHz, VHF band of 90-222MHz, and UHF band of 470-770MHz)). It is to be noted that terrestrial digital TV broadcasting of performing digital mobile TV broadcasting is performed in the UHF band.

However, in the high frequency circuit section 11 in the tuner module 1, a bandwidth of a signal to be processed is limited to a digital mobile broadcast signal bandwidth of 500kHz, so that a video signal (having a bandwidth of 6MHz) of a terrestrial analog TV broadcast signal may not be handled. Therefore, only an audio signal of the terrestrial analog TV broadcast signal can be utilized.

It is to be noted that, as described later also, the tuner module 1 has only a size of a small stamp horizontally and vertically because it does not use an air-core coil etc. required in an ordinary reception circuit and reduces power dissipation to an extremely small value and also is extremely miniaturized and thinned to a thickness of 2-3mm, thereby qualifying itself well for use as installed in a mobile device such as a cellular phone, which is to be small in size.

In a case where the cellular phone relative to the embodiment is not used as a cellular phone, it can be utilized to receive a digital mobile TV broadcast, a terrestrial analog TV broadcast, and an FM radiobroadcast and select their channels through the tuner module 1. In this case, the high frequency circuit section 11 receives the various broadcast signals through the antenna ANT. The high frequency circuit section 11 selects a channel of a target one of these broadcast signals and the signal of the selected channel is converted into an intermediate frequency signal in a predetermined band width and supplied to the switch circuit 12.

The switch circuit 12 performs switchover as to whether to supply this provided intermediate frequency signal to the digital demodulation section 13 or to a surface acoustic wave (SAW) filter 14, in response to an instruction, which is input from a user, accepted through the key operation section equipped to this cellular phone. If the user instructs the phone to receive a digital mobile TV broadcast and select its channel, the switch circuit 12 is switched so as to supply the intermediate frequency signal from the high frequency circuit section 11 to the digital demodulation section 13.

The digital demodulation section 13 converts this received intermediate frequency signal into a digital signal and demodulates it, to form a transport stream (TS) signal and supply it to the de-multiplexer 2. The de-multiplexer 2 extracts from the received TS signal video data and sound data of a broadcast program that corresponds to the instruction input from the user and supplies them to the MPEG decoder 3. The MPEG decoder 3 decompresses the received video data and sound data in accordance with the MPEG scheme and restores the video data and the sound data before being compressed and encoded.

The MPEG decoder 3 supplies the restored video data to the LCD controller 4 and converts the restored sound data into an analog signal and supplies it to the switch circuit 6. The LCD controller 4 forms a video signal in a format to be supplied to the LCD5 from the received video data and supplies it to the LCD5. With this, on the display screen of the LCD5, a video in accordance with the video signal from the LCD controller 4 is displayed.

Further, as described above, in a case where a channel of a digital mobile TV broadcast is selected by the user, the switch circuit 6 is switched through a control section, not shown, so as to output sound data from the MPEG3 decoder 3. The audio signal from the MPEG decoder 3 is then supplied to the audio signal processing section 7. The audio signal processing section 7 performs predetermined processing such as amplification on this received audio signal and supplies the post-processing audio signal to the speaker 8. With this, from the speaker 8, a sound in accordance with the sound data from the MPEG decoder 3 is produced.

Further, in a case where the user instructs the cellular phone to receive a terrestrial analog TV broadcast or an FM radiobroadcast and select its channel, the switch circuit 12 is switched so as to supply the SAW filter 14 with the intermediate frequency signal from the high frequency circuit section 11. The SAW filter 14 extracts from the received intermediate frequency signal an audio signal component of the terrestrial analog TV broadcast and an audio signal component of the FM radiobroadcast and supplies them to the analog sound demodulation section 15.

If the user has instructed the cellular phone to receive the terrestrial analog TV broadcast and select its channel, the analog sound demodulation section 15 demodulates the audio signal of the terrestrial analog TV broadcast signal and outputs it. If he or she has instructed the cellular phone to receive the FM radiobroadcast and select its channel, the analog sound demodulation section 15 demodulates the FM radiobroadcast signal and outputs it. The analog audio signal from the analog sound demodulation section 15 is supplied to the switch circuit 6.

If the user has instructed the cellular phone to receive the terrestrial analog TV broadcast or the FM radiobroadcast and select its channel, the switch circuit 6 is switched so as to output the analog audio signal from the analog sound demodulation section 15 under the control of control section, not shown. In this case, the analog audio signal from the analog sound demodulation section 15 is supplied to the audio signal processing section 7.

When receiving this analog audio signal, the audio signal processing section 7 performs predetermined processing such as amplification on it and supplies the post-processing audio signal to the speaker 8. With this, from the speaker 8, a sound in accordance with the audio signal of the terrestrial analog TV broadcast or the FM radiobroadcast signal is produced.

In such a manner, the cellular phone relative to the present embodiment, if out of communication, receives through the tuner module 1 installed in itself a digital mobile TV broadcast signal anywhere it is possible to receive it and selects its channel so that a video and a sound of a broadcast program provided by this digital mobile TV broadcast signal can be seen and heard, respectively.

Further, at a place where it is possible to receive a terrestrial analog TV broadcast signal or an FM radiobroadcast signal, the cellular phone receives it and selects its channel so that a sound of a broadcast program provided by this terrestrial analog TV broadcast signal or this FM radiobroadcast signal can be demodulated and heard.

### [Configuration of tuner module]

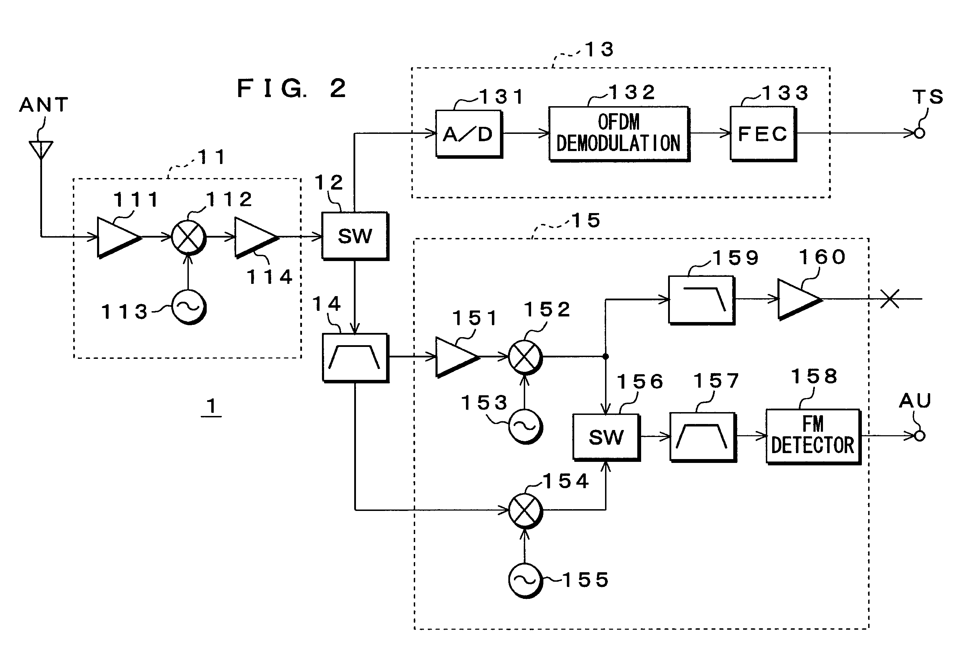

The following will describe in detail a configuration of a tuner module 1 installed in a cellular phone relative to the present embodiment. FIG. 2 is an explanatory block diagram of the configuration of the tuner module 1 installed in an embodiment of the cellular phone of the present embodiment.

As described with reference to FIG. 1 and shown in FIG. 2, the tuner module 1 has the high frequency circuit section 11 to which the reception antenna ANT is connected, the digital demodulation section 13, and the analog sound demodulation section 15. Further, the switch circuit 12 is provided to selectively connect the high frequency circuit section 11 to one of the digital demodulation section 13 and the analog sound demodulation section 15. Between the switch circuit 12 and the analog sound demodulation section 15, a band-limiting SAW filter 14 is provided.

In this case, the high frequency circuit section 11 and the digital demodulation section 13 make up a digital mobile TV broadcasting tuner (a first tuner section), to enable utilization of a video signal and an audio signal provided by a digital mobile TV broadcast. Further, the analog sound demodulation section 15 is provided to make up a tuner (a second tuner) section for receiving an terrestrial analog TV broadcast and an FM radiobroadcast with the high frequency circuit section 11, thereby enabling utilization of audio signals of the terrestrial analog TV broadcast and the FM radiobroadcast.

Further, as shown in FIG. 2,the high frequency circuit section 11 has a high frequency amplifier 111, a mixer 112, a local oscillator 113, and an intermediate frequency amplifier 114. The digital demodulation section 13 has an analog/digital (A/D) converter 131, an orthogonal frequency division multiplexing (OFDM) demodulation section 132, and a forward error correction (FEC) section 133.

Further, the analog sound demodulation section 15 has an intermediate frequency amplifier 151, a video detector 152, an oscillation circuit 153, an FM mixer 154, an FM local oscillation circuit 155, a switch circuit 156, a band-limiting filter 157, an FM detector 158, a low-pass filter 159, and an amplifier 160.

Of these, the low-pass filter 159 and the amplifier 160 are used in processing of a video signal. They are thus not utilized in the present embodiment. That is, the analog sound demodulation section 15 utilizes an intermediate frequency circuit section (intermediate frequency demodulation section) as it is, which is a terrestrial analog TV broadcasting integrated circuit (IC) developed for use in a mobile device such as a cellular phone.

The tuner module 1 thus configured relative to the present embodiment operates as described below in response to a broadcast wave which is received and whose channel is selected. In the following, the operations are described separately between the case of receiving a digital mobile TV broadcast signal and selecting its channel and the case of receiving a terrestrial analog TV broadcast or an FM radiobroadcast and selecting its channel.

First, the case of receiving a digital mobile TV broadcast signal and selecting its channel will be described. A broadcast signal received through the antenna ANT is supplied to the high frequency amplifier 111 in the high frequency circuit section 11 where it is amplified to a predetermined level and supplied to the mixer 112. This mixer 112 is supplied also with a local oscillation signal from the local oscillator 113 as shown in FIG. 2.

As described above also, digital mobile TV broadcasting is performed by using one of the 13 segments of a terrestrial digital TV broadcast signal and uses a bandwidth of about 500kHz. Therefore, the local oscillation signal from the local oscillator 113 is used to convert the digital mobile broadcast signal, which is a target broadcast signal, into a predetermined intermediate frequency signal having a bandwidth of about 500kHz.

The intermediate frequency signal with a bandwidth of 500kHz formed by mixing the high frequency signal from the high frequency amplifier 111 and the local oscillation signal from the local oscillator 113 at the mixer 112 is amplified by the intermediate frequency amplifier 114 and then supplied to the A/D converter 131 in the digital demodulation section 13 through the switch circuit 12, which is switched to the side of the digital demodulation section 13 in this case. The A/D converter 131 converts the received intermediate frequency signal into a digital signal and supplies it to the OFDM demodulation section 132.

The OFDM demodulation section 132 performs OFDM demodulation on this received digital signal and supplies the post-demodulation digital signal to the FEC section 133. The FEC section 133 performs code error correction on this received post-OFDM demodulation digital signal. Accordingly, a TS signal made up of a video data packet and a sound data packet of a target digital mobile TV broadcast signal is formed and output via an output terminal TS for the TS signal.

The TS signal output from the output terminal TS is, as described with reference to FIG. 1, supplied to the following-stage de-multiplexer 2 where video data and sound data of a target broadcast program are extracted and decoded by the MPEG decoder 3 so that they may be utilized.

Next, the case of receiving a terrestrial analog TV broadcast or an FM radiobroadcast and selecting its channel will be described. The operations in the high frequency circuit section 11 are almost the same as those in the case of receiving a digital mobile TV broadcast and selecting its channel. That is, a broadcast signal received through the antenna ANT is amplified to a predetermined level by the high frequency amplifier 111 in the high frequency circuit section 11 and converted by the mixer 112 into a terrestrial analog TV broadcast signal in a predetermined frequency band by using a local oscillation signal from the local oscillator 113. Alternatively, an FM radiobroadcast signal is converted into a predetermined intermediate frequency signal with a bandwidth of about 500kHz.

After being amplified by the intermediate frequency amplifier 114, the intermediate frequency signal from the mixer 112 is supplied to the SAW filter 14 through the switch circuit 12, which is switched to the side of the analog sound demodulation section 15 in this case. The intermediate frequency signal is band-limited in the SAW filter 14 and supplied to the intermediate frequency amplifier 151 and the FM mixer 154 in the analog sound demodulation section 15.

If, then, the broadcast signal, which has been received and whose channel has been selected, is the terrestrial analog TV broadcast signal, the intermediate frequency signal from the SAW filter 14 is amplified by the intermediate frequency amplification circuit 151 in the analog sound demodulation section 15 and then supplied to the video detector 152. The video detector 152 detects and converts the supplied intermediate frequency signal into a video signal and a voice frequency signal based on the oscillation signal from the oscillation circuit 153.

The video signal formed by the video detector 152 is output via the low-pass filter 159 and the amplification circuit 160 and the voice frequency signal is supplied to the band-pass filter 157 via the switch circuit 156, which is switched to the side of the video detector 152 in this case. The voice frequency signal band-limited by the band-limiting filter 157 is supplied to the FM detector 158 where it is detected (demodulated) to form an analog audio signal, which is in turn output via an audio signal output terminal AU.

If the broadcast signal, which has been received and whose channel has been selected, is the FM radiobroadcast signal, on the other hand, the intermediate frequency signal from the SAW filter 14 is converted by the FM mixer 154 into a second intermediate frequency FM signal by using a local oscillation FM signal from the FM local oscillation circuit 155. The second intermediate frequency FM signal from the FM mixer 154 is supplied via the switch circuit 156 to the band-pass filter 157. The second intermediate frequency FM signal band-limited by this band-limiting filter 157 is supplied to the FM detector 158 where it is detected (demodulated) to form an analog audio signal, which is output via the audio signal output terminal AU.

The analog audio signal output via the audio signal output terminal AU is, as described with reference to FIG. 1, supplied via a switch circuit 6 to an audio signal processing section 7 where it undergoes audio signal processing such as amplification and is supplied to a speaker 8. A sound of the terrestrial analog TV broadcast or the FM radiobroadcast is produced so that it can be heard.

In such a manner, the cellular phone relative to the present embodiment, if out of communication, receives through user's selection a digital mobile TV broadcast signal and selects its channel so that its video and sound can be seen and heard, respectively and also receives a terrestrial analog TV broadcast or an FM radiobroadcast and selects its channel so that a sound of the terrestrial analog TV broadcast or the FM radiobroadcast can be heard.

In the tuner module 1 relative to the present embodiment, the local oscillator 113 in the high frequency circuit section 11 can generate a local oscillation signal to select channels of a variety of broadcast signals that are present in a wide bandwidth of 77-770MHz, and to convert the signal of the selected channel into an intermediate frequency signal having a bandwidth of about 500kHz. This allows to be generated the local oscillation signal that corresponds to the broadcast signals, which are received and whose channels are selected, in a very wide frequency range, so that the tuner module 1 can obtain a wide scope of activities.

Accordingly, in the tuner module 1 relative to the present embodiment, the only one high frequency circuit section 11 can accommodate any of the cases of receiving a digital mobile TV broadcast signal, a terrestrial analog TV broadcast signal, and an FM radiobroadcast signal and selecting their channels.

Further, as for the terrestrial analog TV broadcast signal, its video signal undergoes the corresponding amplitude modulation (AM) with respect to a video carrier wave in a band of 90-770MHz and is transmitted while its audio signal undergoes the corresponding frequency modulation (FM) with respect to an audio carrier wave having a frequency different from that of this video carrier wave, for example, 4.5MHz that is higher than that of the video carrier wave and is transmitted. Further, an audio signal of the FM radiobroadcast undergoes the corresponding frequency modulation (FM) with respect to a carrier wave of 77-90MHz and is transmitted.

Therefore, the band-limiting filter 157 and the FM detector 158 can be used commonly in both cases of receiving the audio signal of the terrestrial analog TV broadcast signal and the audio signal of the FM radiobroadcast signal and selecting their channels so that these signals may be utilized.

Further, the tuner module 1 avoids using an air-core coil as an inductor element, which coil is thick, and reduces power dissipation to an extremely small value and so the tuner module 1 itself can be miniaturized and thinned, being small enough to be installed into a mobile device such as a cellular phone.

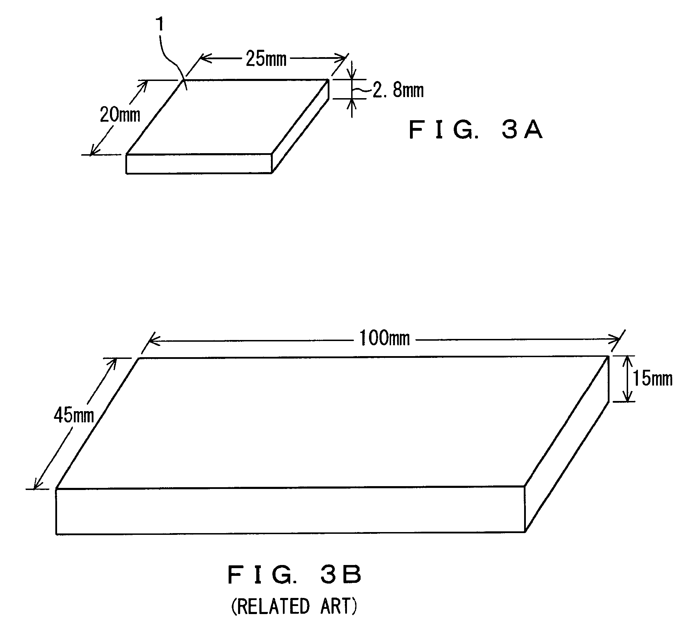

FIGS. 3A and 3B are diagrams each for comparing an outer appearance of an embodiment of the tuner module 1 (FIG. 3A) to which the present invention is applied and that of a pat ordinary tuner module (FIG. 3B). As described above, the tuner module 1 as shown in FIG. 3A can be miniaturized and thinned more and more to roughly a size of a small stamp, with a small height (thickness) though, such as 25mm (length) x 20mm (depth) x 2.8 mm (height) (volume: 1.4 cc).

As compared to the past ordinary tuner module configured to have the same functions and possibly have a size of 100mm (length) x 45mm (depth) x 15mm (height) (volume: 67.5 cc) as shown in FIG. 3B, the tuner module 1 can be found to be extremely miniaturized and thinned. Such a tuner module 1 as shown in FIG. 3A can be installed easily into a cellular phone.

### [Another Embodiment]

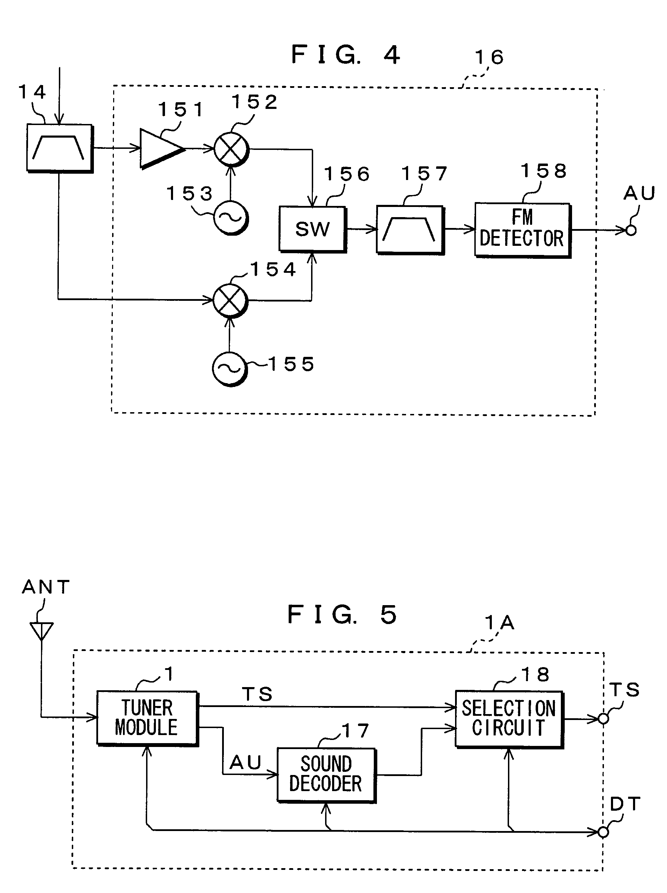

Although the analog sound demodulation section 15, as shown in FIG. 2, has utilized the intermediate frequency circuit section in the terrestrial analog TV broadcasting tuner module as it is, the present invention is not limited thereto. For example, as shown in FIG. 4, of course the low-pass filter 159 and the amplification circuit 160, which make up a processing system for a video signal, can be omitted to constitute a demodulation circuit dedicated for an audio signal.

That is, the analog sound demodulation section 16 shown in FIG. 4 is constituted much the same way as the analog sound demodulation section 15 shown in FIG. 2 except it is not equipped with the low-pass filter 159 and the amplification circuit 160. Therefore, in the analog sound demodulation section 16 shown in FIG. 4, its components having similar configurations as those of the analog sound demodulation section 15 are indicated by the same reference symbols and their detailed explanation will be omitted.

Further, the intermediate frequency amplification circuit 151, the video detector 152, and the oscillation circuit 153 can also be omitted by configuring the SAW filter 14 as a band-limiting filter that permits an intermediate frequency audio signal generated from a terrestrial analog TV broadcast signal or an FM radiobroadcast signal to pass therethrough.

In this case, the analog sound demodulation section 16 can be made up of only the FM mixer 154, the FM local oscillation circuit 155, the band-pass filter 157, and the FM detector 158, thereby realizing further miniaturization and power saving. In such a configuration, in both cases of receiving a terrestrial analog TV broadcast signal and an FM radiobroadcast signal and selecting their channels, an intermediate frequency audio signal generated from the terrestrial analog TV broadcast signal or the FM radiobroadcast signal can be supplied via the SAW filter 14 to the FM mixer 154 and, as described above also, converted into a second intermediate frequency FM signal, which can be supplied via the band-pass filter 157 to the FM detector to demodulate the audio signal.

### [Card-type tuner]

Although the above embodiments where the tuner module 1 is installed into a cellular phone have been described, the present invention is not limited thereto. In many cases, a so-called mobile device such as a cellular phone has a memory card slot in it for connecting an external memory such as a so-called memory card.

In this regard, it is also possible to add a tuner feature for reception of broadcasts to a mobile device such as cellular phone by making up a card-type tuner in which the tuner module 1 is installed and mounting it, only when necessary, into the memory card slot in the mobile device such as the cellular phone.

FIG. 5 is explanatory block diagram of a configuration of a card-type tuner. A card-type tuner 1A shown in FIG. 5 includes the tuner module 1 shown in FIG. 2, a sound decoder 17, and a selection circuit 18 in a card-type frame. As described with reference to FIG. 2, the tuner module 1 can select and output any of a TS signal in accordance with a digital mobile TV broadcast, an analog audio signal in accordance with a terrestrial analog TV broadcast, and an analog audio signal in accordance with an FM radiobroadcast.

In many cases, a mobile device such as a cellular phone is equipped with a digital signal processing system, in which features of a de-multiplexer and an MPEG decoder are installed. Therefore, by limiting output signals of the card-type tuner 1A to the TS signal, it is possible to add a tuner feature for reception of broadcasts without newly providing the mobile device such as a cellular phone with an analog audio signal input terminal or an analog audio signal processing system, that is, without changing anything.

Therefore, in the case of the card-type tuner 1A shown in FIG. 5, the TS signal (written as TS in FIG. 5) is supplied as it is to the selection circuit 18 and an analog audio signal (written as AU in FIG. 5) is supplied to the sound decoder 17. The sound decoder 17 converts this received analog audio signal into a digital audio signal, which is in turn converted into a signal that matches a TS signal format and supplied to the selection circuit 18.

The selection circuit 18 performs switchover, in accordance with a selection input from a user, as to whether to output the TS signal (TS signal corresponding to the digital mobile TV broadcast signal) received from the tuner module 1 or to output one of the TS signals (the TS signal corresponding to the terrestrial analog TV broadcast audio signal and the TS signal corresponding to the FM radiobroadcast audio signal) received from the sound decoder 17.

The TS signal thus output from the selection circuit 18 is input via an output terminal TS for the TS signal to the digital signal processing system in a mobile device such as a cellular phone where necessary video data and sound data are extracted therefrom and undergo MPEG decoding to restore video data and sound data or sound data before data compression. Those restored video data and sound data or sound data are used, so that a video and a sound can be viewed and heard.

It is to be noted that a terminal DT of the card-type tuner 1A of FIG. 5 is a data input/output terminal for transmission and reception of a control signal etc. so that a channel selection control signal in accordance with an instruction input from the user, a state notification signal to notify of a state, etc. can be transmitted to and received from a side of the body of the mobile device such as a cellular phone.

It is thus possible to constitute a card-type tuner, thereby easily adding the tuner feature for a broadcast signal to a variety of mobile devices having a memory card slot in them.

It is to be noted that the card-type tuner 1A shown in FIG. 5 is one configuration and the present invention is not limited thereto. For example, such a configuration is possible that video data and sound data may undergo MPEG decoding in the card-type tuner and then be output as restored to a pre-data compression state and, furthermore, such restored video data and sound data may further be converted into analog signals and output.

Further, it is of course possible to convert video data and sound data into data items of a predetermined format in the card-type tuner and output them. That is, it is also possible to install a digital encoder for forming data having a format that matches a digital decoder equipped to a mobile device to which the card-type tuner is attached.

Further, it is possible to reduce the size of the card-type tuner to at least a size of a variety of so-called memory cards already provided. Specifically, as explained with reference to FIG. 3, it can be reduced to a size of 25mm (length) x 20mm (depth) x 2.8 mm (height) or less.

Further, although the tuner module 1 in the above embodiments has been described as being capable of utilizing a video and a sound of a digital mobile TV broadcast, a sound of a terrestrial analog TV broadcast, and a sound of an FM radiobroadcast, the present invention is not limited thereto. For example, it is possible to demodulate and utilize also a video signal provided by a terrestrial analog TV broadcast by installing a high frequency circuit that can convert also a broadcast signal having a large bandwidth for terrestrial analog TV broadcasting into an intermediate frequency signal without limiting its band. For a high frequency circuit for receiving the terrestrial analog TV broadcast signal, see Japanese Patent Application Publication No. 2004-201108.

It is further possible to use an arbitrary frequency of an intermediate frequency signal and a variety of schemes for detecting a video and a sound in accordance with various conditions.

Further, although in the cellular phone of the above embodiments, it has selected a path for processing a broadcast signal by using the switch circuit 12, the switch circuit 156, the switch circuit 6, etc., it is also possible to avoid using the switch circuits. For example, in the case of processing a digital mobile TV broadcast signal, it is possible to conduct control so that the digital demodulation section 13 may be operative but the analog sound demodulation section 15 may not be operative in FIG. 1.

Oppositely, for example, it is also possible to conduct control so that the analog sound demodulation section 15 may be operative but the digital demodulation section 13 may not be operative and the FM local oscillation circuit 155 in the analog sound demodulation section 15 may not be operative in the case of processing a terrestrial analog TV broadcast signal and that the analog sound demodulation section 15 may be operative but the digital demodulation section 13 may not be operative and the oscillation circuit 153 in the analog sound demodulation section 15 may not be operative in the case of processing an FM radiobroadcast signal, thereby selecting an appropriate signal processing path to process a receive signal without providing any switch circuit.

In this case, operation/non-operation of these sections can be controlled by supply/non-supply of power. Such the controlling of the circuit sections to be operative or non-operative instead of providing the switch circuit allows power to be saved more.

Further, although the above embodiment has been described with reference to an embodiment where the present invention is applied to a cellular phone, the present invention is not limited thereto. For example, the present invention can be also applied to an electronic device equipped with a display device and a speaker or an audio signal output terminal, at least a headphone terminal etc., such as a PDA, a laptop computer, a digital still camera for mainly photographing a still picture, and a digital video camera for mainly connecting a moving picture, for example.

Thus have been described the high frequency signal receiving apparatus. It should be understood by those skilled in the art that various modifications, combinations, sub-combinations and alternations may occur depending on design requirements and other factors insofar as they are within the scope of the appended claims or the equivalents thereof.

## Claims

1. A high frequency signal receiving apparatus for use in a portable electronic device, the receiving apparatus comprising:
a first tuner section which receives a terrestrial digital TV broadcast signal, selects a channel of the received signal and demodulates a signal of the selected channel; and
a second tuner section which selectively receives any one of a terrestrial analog TV broadcast signal and an FM radiobroadcast signal and selects a channel of the received signal and demodulates a signal of the selected channel.

2. The high frequency signal receiving apparatus according to claim 1, wherein the first tuner section and the second tuner section are housed in a card-type frame that is attached to and detached from portable electronic device.

3. The high frequency signal receiving apparatus according to claim 1, wherein the first tuner section comprises:
a first high frequency circuit section which receives a terrestrial digital TV broadcast signal, selects its channel, and converts the signal of the selected channel into an intermediate frequency signal; and
a digital demodulation section which demodulates a target digital signal from the intermediate frequency signal from the first high frequency circuit section;
wherein the second tuner section comprises:
a second high frequency circuit which selectively receives any one of a terrestrial analog TV broadcast signal and an FM radiobroadcast signal, selects a channel of the received signal, and converts the signal of the selected channel into an intermediate frequency signal; and
an analog audio signal demodulation section which demodulates at least one of an audio signal of the terrestrial analog TV broadcast signal and an audio signal of the FM radiobroadcast signal from the intermediate frequency signal from the second high frequency circuit, and
wherein the first tuner section and the second tuner section are commonly used, as the first and second high frequency circuit sections respectively, as one high frequency circuit having a wide band that can accommodate a broadcast signal in a transmission band from the FM radiobroadcast signal to the terrestrial digital TV broadcast signal.

4. The high frequency signal receiving apparatus according to claim 3, wherein the first tuner section and the second tuner section are housed in a card-type frame that is attached to and detached from portable electronic device.

5. The high frequency signal receiving apparatus according to claim 3, wherein the analog sound demodulation section has a commonly-used FM demodulation section for detecting an audio signal of a terrestrial analog TV broadcast and an audio signal of an FM radiobroadcast.

6. The high frequency signal receiving apparatus according to claim 5, wherein the first tuner section and the second tuner section are housed in a card-type frame that is attached to and detached from portable electronic device.
